# FASCICULE DE BREVET EUROPEEN

(11) **EP 0 921 608 B1**
(45) Date de publication et mention de la délivrance du brevet: **01.10.2008**
(21) Numéro de dépôt: 98403007.2
(22) Date de dépôt: 01.12.1998
(51) Int. Cl.: H01R 13/72, H01R 13/639, H01R 13/60

(54) **Socle de prise de courant pour prise mobile, notamment pour cordon prolongateur**
Fliegende Steckdose speziell für Verlängerungskabel
Mobile mains socket in particular for extension lead

(30) Priorité: 04.12.1997 FR 9715284
(43) Date de publication de la demande: 09.06.1999
(73) Titulaire: LEGRAND, 87000 Limoges (FR); LEGRAND SNC, 87000 Limoges (FR)
(72) Inventeur: Rondeau, Jean-Luc, 72650 La Chapelle Saint-Aubin (FR)
(74) Mandataire: Santarelli

(56) Documents cités:
- DE-B- 1 179 620
- DE-U- 29 603 047
- US-A- 3 808 642
- US-A- 4 298 913
- US-A- 4 853 625
- US-A- 5 014 892
- US-A- 5 261 583

## Description

La présente invention concerne d'une manière générale les prises mobiles, c'est-à-dire les prises de courant qui ne sont pas assujetties à demeure à un quelconque support fixe.

Elle concerne plus particulièrement, mais non nécessairement exclusivement, les cordons prolongateurs, c'est-à-dire les câbles électriques, communément appelés rallonges, qui sont équipés d'un socle de prise de courant à l'une de leurs extrémités, et d'une fiche à l'autre de celles-ci.

Lorsqu'une fiche est embrochée dans le socle de prise de courant d'une telle prise mobile, la connexion ainsi assurée risque de se voir involontairement perturbée, voire même définitivement interrompue, si une traction est exercée de manière intempestive sur l'un ou l'autre des câbles électriques concernés, c'est-à-dire sur celui au bout duquel se trouve la fiche et/ou sur celui au bout duquel se trouve le socle de prise de courant correspondant.

Pour prévenir par avance une telle déconnexion, certains utilisateurs effectuent un noeud autour de l'ensemble avec l'un ou l'autre des câbles électriques concernés.

Outre qu'une telle disposition n'est pas nécessairement connue de tous, elle impose le plus souvent de penser à effectuer le noeud avant de réaliser la connexion, car il n'est en général pas possible de l'effectuer après.

Suivant d'autres dispositions, et cela est notamment le cas de celle faisant l'objet de la demande de brevet français publiée sous le No 2 605 810 et celle faisant l'objet de la demande de brevet internationale publiée sous le No WO96 27222, des dispositifs spécifiques sont prévus pour assurer une solidarisation relative mécanique entre la fiche et le socle de prise de courant concernés.

Ces dispositifs, que les utilisateurs ne sont pas certains d'avoir à leur disposition au moment où ils en ont très précisément besoin puisqu'ils sont distincts des pièces à assembler, sont généralement de mise en oeuvre délicate.

Eu égard, de surcroît, à leur coût non négligeable, ils n'ont pas connu un réel développement commercial.

Suivant, enfin, une autre disposition, le socle de prise de courant de la prise mobile est équipé d'un volet, formant capot, qui, lorsqu'une fiche est embrochée dans ce socle de prise de courant, vient se refermer sur cette fiche, en coopérant alors en retenue avec un ergot prévu en saillie sur celle-ci.

Mais, pour que la solidarisation relative ainsi recherchée soit effective, il importe que la fiche et le socle de prise de courant relèvent de réalisations compatibles, ce qui, sur place, n'est pas toujours nécessairement le cas.

La présente invention a d'une manière générale pour objet un dispositif permettant d'éviter ces divers inconvénients et conduisant en outre à d'autres avantages.

De manière plus précise, elle a pour objet un socle de prise de courant pour prise mobile, notamment pour cordon prolongateur, lequel socle comporte un puits pour recevoir à embrochement une fiche de prise de courant, caractérisé d'une manière générale en ce qu'il est équipé par lui-même, latéralement, d'au moins une boucle ouverte, c'est-à-dire d'au moins une boucle présentant, à distance l'une de l'autre, une extrémité fermée et une extrémité ouverte, cette boucle étant formée de deux brins, l'un supérieur, l'autre inférieur, montés mobiles l'un par rapport à l'autre entre une position de fermeture, pour laquelle, à l'extrémité ouverte de la boucle, ils sont relativement rapprochés l'un de l'autre, et une position d'ouverture, pour laquelle ils sont au contraire relativement écartés l'un de l'autre, ladite boucle étant adaptée à s'opposer à une déconnexion de ladite fiche embrochée sur ledit socle et dont le câble électrique y est reçu à crochetage.

Grâce à une telle disposition, il suffit d'un geste simple, et rapide, à l'utilisateur, pour que, après avoir embroché la fiche sur le socle de prise de courant de la prise mobile, il crochète le câble électrique de cette fiche sur la boucle équipant à cet effet ce socle de prise de courant, en formant ainsi avec ce câble électrique une boucle s'opposant ensuite de manière particulièrement efficace à toute déconnexion de l'ensemble.

On notera qu'on connaissait déjà du modèle d'utilité allemand 296 03 047, un support de socle de prise de courant équipé d'un clip de ceinture. Le clip de ceinture de ce support n'appartient pas au socle et n'est pas adapté à s'opposer à une déconnexion d'une fiche embrochée sur le socle et dont le câble électrique y serait reçu à crochetage.

En effet, il est prévu par sécurité que le socle soit libéré de son support en cas de forte traction sur le câble du socle.

Suivant une forme de réalisation particulière de l'invention, les deux brins de la boucle prévue suivant l'invention sont d'un seul tenant l'un avec l'autre à l'extrémité fermée de cette boucle, en appartenant conjointement l'un et l'autre à une seule et même pièce, et, pour leur mobilité relative l'un par rapport à l'autre, l'un au moins d'entre eux est élastiquement déformable, en sorte que, prise dans son ensemble, la boucle s'apparente à une agrafe.

Du fait de sa conception alors élastique, cette boucle peut avantageusement s'ouvrir, et se refermer, d'elle-même, sous la seule sollicitation du câble électrique qui doit y être engagé et/ou qui doit en être dégagé.

Du fait, corollairement, de sa configuration en agrafe, elle permet avantageusement à l'utilisateur de fixer, s'il le désire, à sa ceinture, ou à l'un des passants de celle-ci, le socle de prise de courant de la prise mobile, ce qui, en lui libérant les mains, lui confère une grande liberté d'intervention, ou, s'il le désire également, de fixer ce socle de prise de courant à un quelconque organe fixe sur lequel la boucle qui l'équipe est susceptible d'avoir prise, tel que, par exemple, un clou, le barreau d'une échelle ou un fil tendu, ce qui accroît encore d'autant ses possibilités d'intervention.

Enfin, la boucle prévue suivant l'invention peut avoir une amplitude suffisante pour qu'il soit possible à l'utilisateur d'y engager plusieurs fois, en spires successives, le câble électrique de la fiche, ce qui lui permet, s'il le désire, d'adapter la longueur libre de ce câble électrique à ses besoins du moment, ou d'utiliser cette boucle pour le rangement de ce câble électrique.

Mais, en variante, suivant d'autres formes de réalisation également envisageables, la boucle prévue suivant l'invention peut s'apparenter par exemple à une pince ou à un mousqueton.

Corollairement, la boucle prévue suivant l'invention peut avantageusement être amovible si désiré.

Il est ainsi avantageusement possible à l'utilisateur de ne la mettre en oeuvre qu'à bon escient, et/ou de lui substituer une boucle d'un autre type, et/ou d'équiper indifféremment d'une telle boucle le socle de prise de courant de l'une ou l'autre des prises mobiles à sa disposition.

Corollairement, également, la boucle prévue suivant l'invention peut, si désiré, être rotative.

Elle peut ainsi suivre avantageusement le câble électrique correspondant quelle que soit l'orientation donnée à celui-ci.

Les caractéristiques et avantages de l'invention ressortiront d'ailleurs de la description qui va suivre, à titre d'exemple, en référence aux dessins schématiques annexés sur lesquels :
la figure 1 est, avec un arrachement local, une vue en perspective du socle de prise de courant d'une prise mobile équipée d'une boucle suivant l'invention ;
la figure 2 est, à échelle supérieure, une vue en perspective de ce socle de prise de courant, pris isolément, sans la boucle suivant l'invention ;
la figure 3 en est, à échelle encore supérieure, une vue partielle en coupe longitudinale, suivant la ligne III-III de la figure 2 ;
la figure 4 en est une vue partielle en plan, suivant la flèche IV de la figure 3 ;
la figure 5 est, à l'échelle de la figure 2, une vue en perspective de la boucle suivant l'invention ;
la figure 6 est, à échelle supérieure, une vue en élévation de cette boucle, suivant la flèche VI de la figure 5 ;
la figure 7 en est une vue en coupe longitudinale, suivant la ligne VII-VII de la figure 5 ;
la figure 8 en est une vue partielle en coupe, suivant la ligne VIII-VIII de la figure 7 ;
la figure 9 est, à échelle différente, une vue en perspective qui, déduite de celle de la figure 1, illustre la mise en oeuvre de la boucle suivant l'invention ;
la figure 10 est une vue en perspective, qui, analogue à celle de la figure 5, se rapporte à une autre boucle suivant l'invention ;

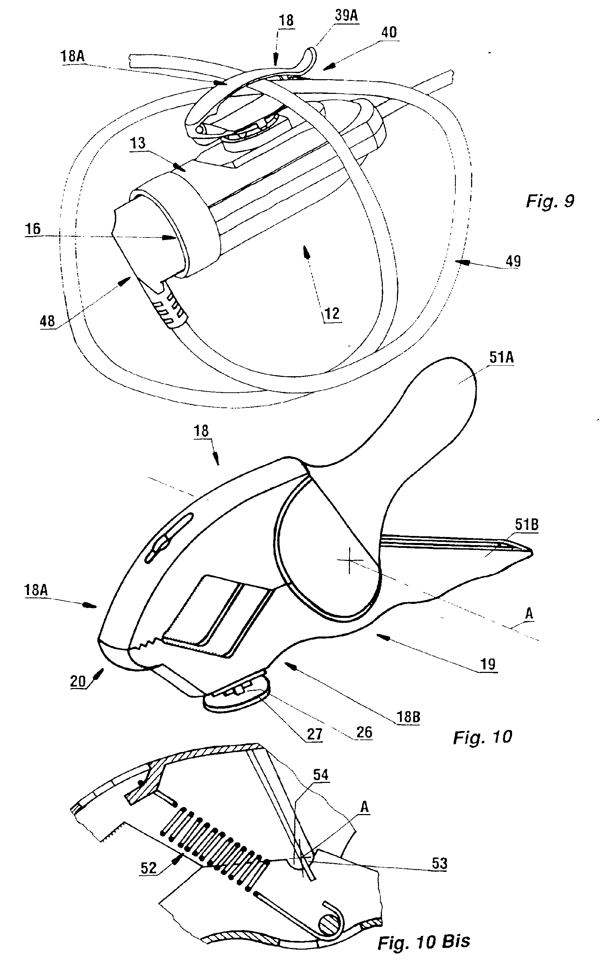

la figure 10bis est une vue partielle en coupe longitudinale de cette autre boucle suivant l'invention ;

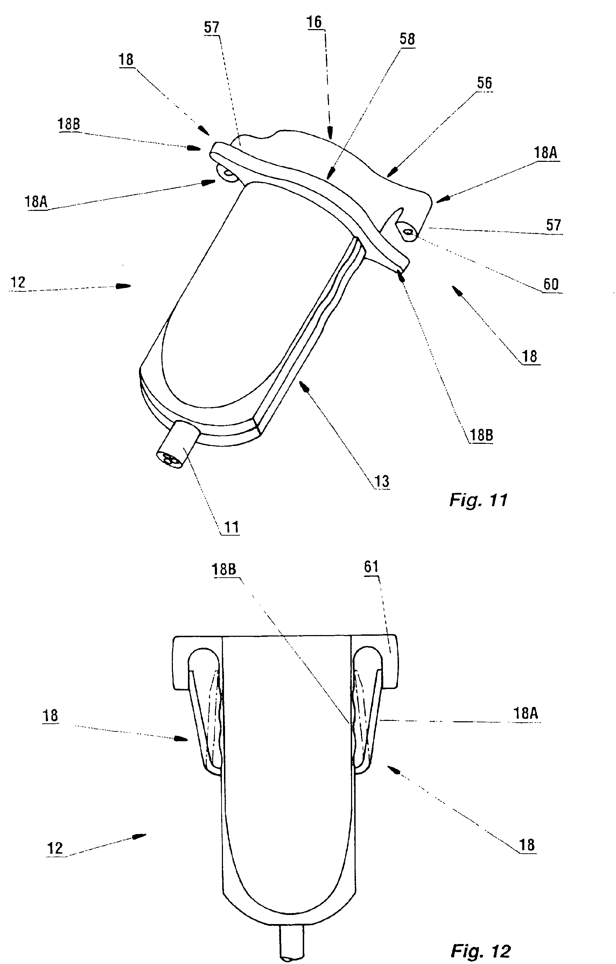

la figure 11 est une vue en perspective se rapportant elle aussi à une autre boucle suivant l'invention ;
la figure 12 est une vue en élévation se rapportant également à une autre boucle suivant l'invention.

Ces figures illustrent, à titre d'exemple, le cas où la prise mobile 10 concernée est un cordon prolongateur.

Cette prise mobile 10 comporte, donc, à l'une des extrémités d'un câble électrique 11, une fiche de prise de courant, qui n'est pas visible sur les figures, et, à l'autre des extrémités de ce câble électrique 11, un socle de prise de courant 12.

Une telle prise mobile 10 étant bien connue par elle-même, et ne relevant pas en soi de la présente invention, elle ne sera pas décrite plus en détail ici.

Seuls en seront décrits les éléments nécessaires à la compréhension de l'invention.

Il suffira, à cet égard, d'indiquer que, de manière connue en soi, le socle de prise de courant 12 dont elle est équipée comporte un corps 13, en matière isolante, qui, dans la forme de réalisation représentée, est relativement allongé, et que, dans cette forme de réalisation, les alvéoles 14 et la broche 15 dont est lui-même équipé ce socle de prise de courant 12 interviennent en bout de ce corps 13, au fond d'un puits 16 prévu à l'extrémité de ce corps 13 opposée à celle à laquelle lui est raccordé le câble électrique 11.

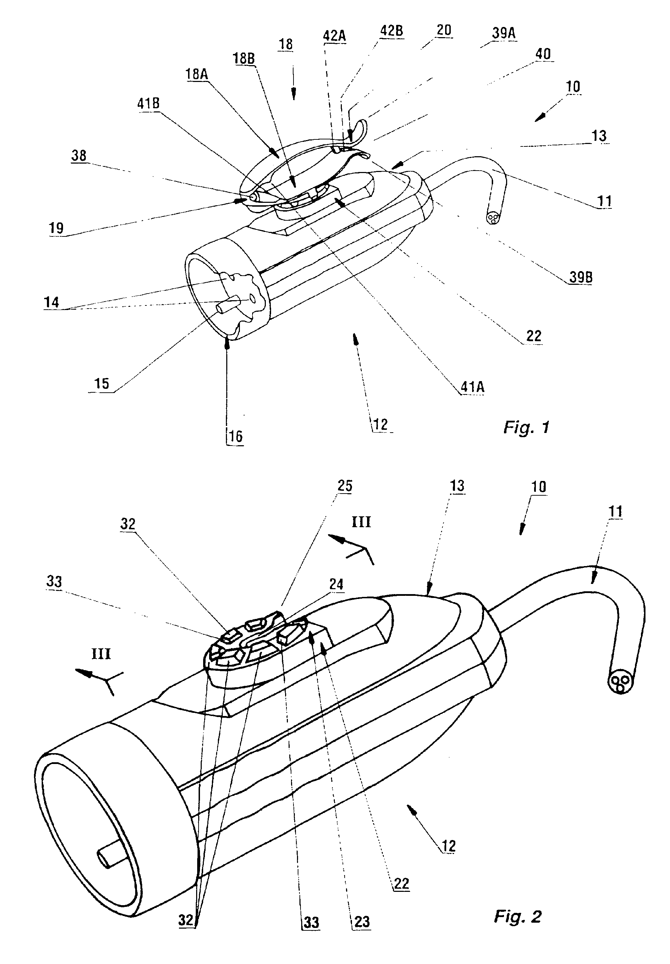

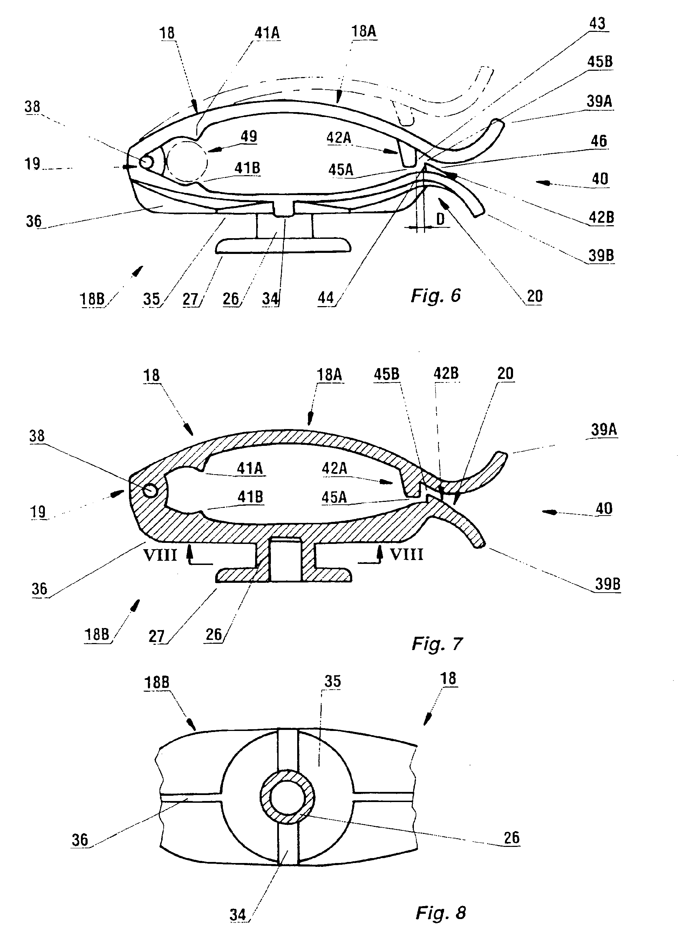

Suivant l'invention, le socle de prise de courant 12 est équipé, latéralement, d'au moins une boucle 18 ouverte, c'est-à-dire d'au moins une boucle 18 présentant, à distance l'une de l'autre, une extrémité fermée 19 et une extrémité ouverte 20, cette boucle 18 étant formée de deux brins 18A, 18B, l'un supérieur, l'autre inférieur, montés mobiles l'un par rapport à l'autre entre une position de fermeture, pour laquelle, à l'extrémité ouverte 20 de la boucle 18, et tel que représenté en traits continus sur les figures 1 à 7, ils sont relativement rapprochés l'un de l'autre, et une position d'ouverture, pour laquelle, tel que schématisé en traits interrompus sur la figure 6, ils sont au contraire relativement écartés l'un de l'autre.

Dans la forme de réalisation représentée sur les figures 1 à 9, seule une boucle 18 est prévue.

En outre, dans cette forme de réalisation, les deux brins 18A, 18B de la boucle 18 sont d'un seul tenant l'un avec l'autre à l'extrémité fermée 19 de cette boucle 18, en appartenant conjointement l'un et l'autre à une seule et même pièce, qui, par exemple, est réalisée par moulage, et, pour leur mobilité relative l'un par rapport à l'autre, l'un au moins d'entre eux est élastiquement déformable, en sorte que la boucle 18 s'apparente à une agrafe.

En pratique, dans la forme de réalisation représentée, seul le brin supérieur 18A de la boucle 18 est élastiquement déformable.

Par ailleurs, dans la forme de réalisation représentée, la boucle 18 est amovible.

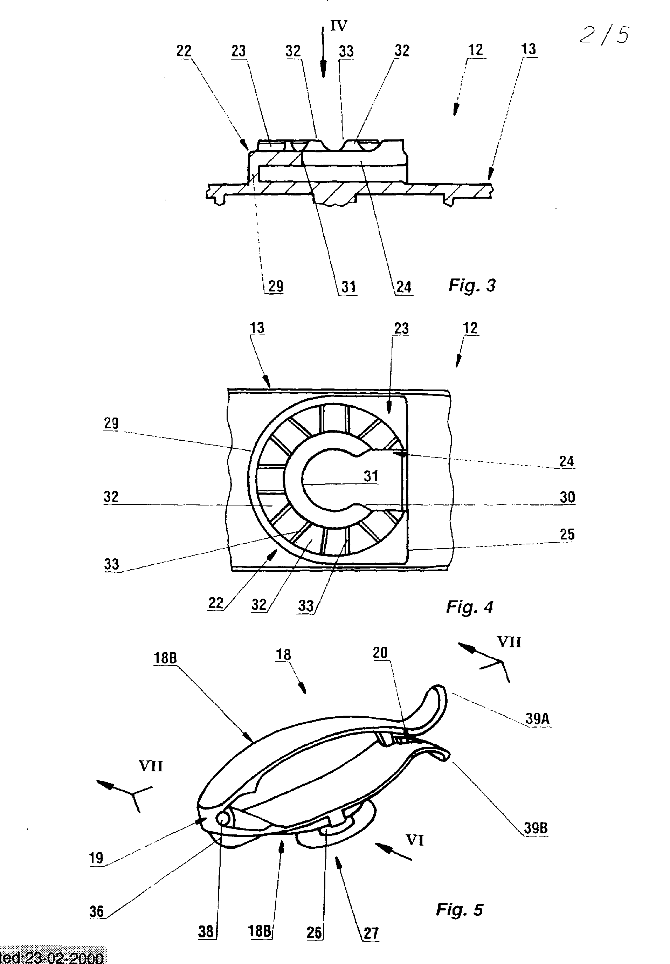

Pour ce faire, le socle de prise de courant 12, et, plus précisément, son corps 13, comporte, en surface, une poche 22, dont la paroi de façade 23 est ajourée par une fente 24 à compter de son bord libre 25, et, conjointement, et ainsi qu'il est mieux visible sur les figures 5 à 7, la boucle 18 comporte, au bout d'un fût 26 dont la largeur est inférieure à celle de la fente 24, une embase 27 par laquelle elle est apte à être engagée, à force, mais à frottement doux, dans la poche 22.

Dans la forme de réalisation représentée, la boucle 18 est en outre rotative.

Pour ce faire, son embase 27 a un contour circulaire, qui, en pratique, est centré sur l'axe du fût 26.

Dans la forme de réalisation représentée, la section transversale de ce fût 26 est d'ailleurs elle aussi circulaire.

Corollairement, le fond 29 de la poche 22 du socle de prise de courant 12 a lui-même un contour hémi-circulaire, au rayon de celui de l'embase 27 de la boucle 18.

Préférentiellement, et cela est le cas dans la forme de réalisation représentée, pour la retenue de la boucle 18, la fente 24 de la poche 22 du socle de prise de courant 12 forme, à proximité de son débouché, un col de retenue 30, dont la largeur est légèrement inférieure à celle du fût 26 de la boucle 18, et que ce fût 26 doit donc franchir en force, par déformation élastique, à la manière des dispositions intervenant lors d'un encliquetage.

Corollairement, le fond borgne 31 de la fente 24 a un contour circulaire, au rayon du fût 26 de la boucle 18, et il s'étend coaxialement par rapport au fond 29 de la poche 22.

Préférentiellement, et cela est le cas dans la forme de réalisation représentée, des moyens d'indexation sont prévus entre la boucle 18 et le socle de prise de courant 12.

Dans la forme de réalisation représentée, ces moyens d'indexation comportent, sur le socle de prise de courant 12, et, plus précisément, sur la paroi de façade 23 de la poche 22 que comporte son corps 13, en saillie sur cette paroi de façade 23, une pluralité de plots 32, qui sont répartis circulairement autour du fond borgne 31 de la fente 24 de cette poche 22, et qui, forment, deux à deux, des rainures 33, et, sur la boucle 18, et ainsi qu'il est mieux visible sur la figure 8, une nervure 34, qui s'étend diamétralement par rapport au fût 26, et dont la section transversale a un contour inférieur à celui des rainures 33, pour un engagement relatif dans l'une ou l'autre de celles-ci.

Dans la forme de réalisation représentée, le fût 26 de la boucle 18 s'étend au dos de son brin inférieur 18B, en saillie sur la surface externe de celui-ci, sensiblement à mi-distance entre ses deux extrémités, et, donc, sensiblement à mi-distance entre l'extrémité fermée 19 de la boucle 18 et l'extrémité ouverte 20 de celle-ci.

La nervure 34 s'étend elle-même au dos de ce brin inférieur 18B, en saillie sur un méplat 35 formé par sa surface externe autour du fût 26.

Dans la forme de réalisation représentée, le brin inférieur 18B de la boucle 18 présente, également, en saillie sur sa surface externe, au moins une nervure de rigidification 36.

Dans la forme de réalisation représentée, seule une telle nervure de rigidification 36 est prévue, et elle s'étend longitudinalement de l'une à l'autre des extrémités du brin inférieur 18B, suivant la ligne médiane de sa surface externe, en étant localement interrompue par le méplat 35 que forme celle-ci dans sa zone médiane.

Préférentiellement, et cela est le cas dans la forme de réalisation représentée, le brin inférieur 18B de la boucle 18 a, en outre, une largeur supérieure à celle de son brin supérieur 18A, en sorte que, d'une part, il recouvre très largement, au bénéfice de l'esthétique, la paroi de façade 23 de la poche 22 du socle de prise de courant 12, et que, d'autre part, c'est préférentiellement par son intermédiaire que se font la saisie et la manipulation de la boucle 18.

Dans la forme de réalisation représentée, l'un et l'autre des brins 18A, 18B de la boucle 18 sont cintrés, avec leur concavité tournée vers l'intérieur.

Mais, par elle-même, la boucle 18 est globalement aplatie, ce qui minimise avantageusement la saillie qu'elle forme sur le corps 13 du socle de prise de courant 12, et sa longueur est préférentiellement inférieure à celle de ce corps 13.

Dans la forme de réalisation représentée, la boucle 18 comporte, à son extrémité fermée 19, un perçage 38, qui la traverse transversalement de part en part, et qui, si désiré, permet de lui atteler un quelconque anneau de suspension, de préférence métallique, non représenté.

Ce perçage 38 constitue en outre avantageusement un évidement grâce auquel est obtenue, à l'ouverture, c'est-à-dire lors d'une déformation élastique du brin supérieur 18A, une excellente répartition des contraintes au sein de l'extrémité fermée 19, alors concernée, de la boucle 18.

Le perçage 38 facilite enfin le moulage de la boucle 18, en évitant la formation de retassure dans la zone correspondante, relativement épaisse, de celle-ci.

Dans la forme de réalisation représentée, les deux brins 18A, 18B de la boucle 18 comportent chacun un prolongement 39A, 39B au-delà de l'extrémité ouverte 20 de celle-ci, et les prolongements 39A, 39B ainsi présents à cette extrémité ouverte 20 de la boucle 18 vont en divergeant l'un par rapport à l'autre, en formant ainsi avantageusement entre eux un convergent d'engagement 40.

Dans la forme de réalisation représentée, l'un au moins des brins 18A, 18B de la boucle 18, et, préférentiellement, tel que représenté, chacun de ceux-ci, présente, par ailleurs, en saillie sur sa surface interne, à proximité de l'extrémité fermée 19 de la boucle 18, une nervure 41A, 41B, qui s'étend transversalement sur une partie au moins de sa largeur.

Par exemple, et tel que représenté, les nervures 41A, 41B s'étendent chacune respectivement sur la totalité de la largeur des brins 18A, 18B, et elles sont établies en vis-à-vis.

Dans la forme de réalisation représentée, ces nervures 41A, 41B ont un profil transversal sensiblement triangulaire, avec, cependant, des flancs concaves.

Dans la forme de réalisation représentée, l'un au moins des brins 18A, 18B de la boucle 18 présente, en outre, en saillie sur sa surface interne, à proximité de l'extrémité ouverte 20 de cette boucle 18, un ergot 42A, 42B.

Par exemple, et tel que représenté, l'un et l'autre des brins 18A, 18B de la boucle 18 présentent un tel ergot 42A, 42B en saillie sur leur surface interne, et, d'un brin 18A, 18B à l'autre, les ergots 42A, 42B sont décalés longitudinalement l'un par rapport à l'autre, d'une longueur suffisante pour que le front arrière 43 de l'un, en l'espèce l'ergot 42A, qui est celui le plus proche de l'extrémité fermée 19 de la boucle 18, se situe à une distance D, éventuellement nulle, du front avant 44 de l'autre, en l'espèce l'ergot 42B, qui est celui le plus proche de l'extrémité ouverte 20 de la boucle 18, figure 6.

En pratique, et ainsi qu'il est mieux visible sur les figures 6, 7, les ergots 42A, 42B que les brins 18A, 18B de la boucle 18 présentent ainsi en saillie sur leur surface interne, ont des hauteurs suffisantes pour que, au repos, leurs extrémités libres 45A, 45B soient imbriquées, ces extrémités libres 45A, 45B se dépassant l'une l'autre en direction du brin 18A, 18B opposé.

Préférentiellement, et cela est le cas dans la forme de réalisation représentée, le front arrière 46 de l'ergot 42B, qui est celui le plus proche de l'extrémité ouverte 20 de la boucle 18, s'étend en oblique, cet ergot 42B ayant une hauteur progressivement décroissante en direction de l'extérieur.

Lorsque, en service, et tel que représenté sur la figure 9, une fiche de prise de courant 48 est embrochée dans le socle de prise de courant 12, à la faveur du puits 16 que forme le corps 13 de celui-ci, le câble électrique 49 auquel est attelée cette fiche de prise de courant 48 peut avantageusement être passé une ou plusieurs fois, en spires, dans la boucle 18, par simple engagement dans cette boucle 18 à la faveur de l'extrémité ouverte 20 de celle-ci, et au prix d'une simple déformation élastique temporaire de son brin supérieur 18A.

Ainsi qu'il est aisé de le comprendre, le convergent d'engagement 40 que forment entre eux les prolongements 39A, 39B des brins 18A, 18B de la boucle 18 facilite cet engagement, et il en est de même du profil oblique de l'ergot 42B que présente en saillie sur sa surface interne le brin inférieur 18B.

Tel que schématisé en traits interrompus sur la figure 6, l'une au moins des spires du câble électrique 49 peut être engagée à force au-delà des nervures 41A, 41B des brins 18A, 18B de la boucle 18, en se trouvant dès lors retenue par celles-ci à l'extrémité fermée 19 de cette boucle 18.

Ainsi qu'il est aisé de le comprendre, les ergots 42A, 42B prévus en saillie sur la surface interne des brins 18A, 18B de la boucle 18 sont de nature à s'opposer à tout dégagement intempestif du câble électrique 49 hors de celle-ci, en maintenant de surcroît fermée cette boucle 18 même si un éventuel effort est alors exercé sur ce câble électrique 49.

Ainsi qu'il est également aisé de le comprendre, la boucle 18 peut, par rotation autour de l'axe de son embase 27, occuper une position angulaire quelconque par rapport au corps 13 du socle de prise de courant 12.

Dans la forme de réalisation représentée, en variante, sur la figure 10, les deux brins 18A, 18B de la boucle 18 appartiennent, chacun respectivement, à des pièces distinctes, et, pour leur mobilité relative l'un par rapport à l'autre, ils sont montés pivotants l'un sur l'autre autour d'un axe d'articulation A qui s'étend transversalement à l'extrémité fermée 19 de la boucle 18, en sorte que la boucle 18 s'apparente à une pince.

Par exemple, et tel que représenté, les deux brins 18A, 18B de la boucle 18 se prolongent l'un et l'autre par un levier de préhension 51A, 51B au-delà de leur axe d'articulation A, et, donc, au-delà de l'extrémité fermée 19 de la boucle 18.

En outre, les deux brins 18A, 18B de la boucle 18 sont sollicités en permanence en direction de leur position de fermeture par des moyens élastiques 52, en l'espèce un simple ressort de traction, qui, à l'une de ses extrémités, est attelé à l'un des brins 18A, 18B de la boucle 18, et qui, à l'autre de ses extrémités, est attelé à l'autre de ceux-ci.

Dans la forme de réalisation représentée, les deux brins 18A, 18B de la boucle 18 ont l'un et l'autre un profil transversal en U, et, leurs concavités respectives étant tournées l'une vers l'autre, ils sont opposés l'un à l'autre par la tranche de leurs ailes latérales.

Le ressort de traction constituant les moyens élastiques 52 s'étend dans le volume correspondant.

Dans la forme de réalisation représentée, l'axe d'articulation A des deux brins 18A, 18B est par ailleurs matérialisé par deux bossages 53, de contour hémi-circulaire, que l'un des brins 18A, 18B, en l'espèce le brin supérieur 18A, comporte en saillie sur la tranche de ses deux ailes latérales, ces bossages 53 étant chacun en prise à rotation avec deux encoches 54 que l'autre des brins 18A, 18B, en l'espèce le brin inférieur 18B, présente corollairement lui-même en creux sur la tranche de ses deux ailes latérales.

Pour le reste, les dispositions sont de même type que les précédentes.

En particulier, la boucle 18 présente, au dos de son brin inférieure 18B, un fût 26 et une embase 27.

Ainsi qu'on le notera, la boucle 18 peut ainsi, si désiré, être substituée, à la demande, à la boucle 18 précédente.

Dans les formes de réalisation représentées, en variante, sur les figures 11 et 12, le socle de prise de courant 12 comporte, dos à dos, deux boucles 18.

Par exemple, figure 11, l'un des brins 18A, 18B de chacune de ces boucles 18, en l'espèce leur brin inférieur 18B, est fixe, et l'autre, en l'espèce le brin supérieur 18A, appartient à une bague 56 montée rotative.

Par exemple, et tel que représenté, l'un des brins 18A, 18B de chacune des boucles 18, en l'espèce leur brin inférieur 18B, s'étend de manière rectiligne, sensiblement perpendiculairement à l'axe de rotation de la bague 56, et l'autre, en l'espèce le brin supérieur 18A, présente un retour 57 dans sa direction.

Dans la forme de réalisation représentée, le brin inférieur 18B de chacune des boucles 18 appartient à un flasque 58, qui, commun à l'une et l'autre des deux boucles 18, s'étend transversalement, à la manière d'une garde, au voisinage de l'extrémité libre du corps 13, et la bague 56 est montée rotative autour du puits 16 formé par celui-ci.

Préférentiellement, des moyens d'encliquetage sont prévus entre les brins 18A, 18B de chacune des boucles 18, pour un verrouillage débrayable d'un telle boucle 18 en position de fermeture.

Par exemple, et tel que représenté, ces moyens d'encliquetage comportent une encoche 60, en creux sur la tranche d'extrémité du retour 57 du brin supérieur 18A, pour coopération avec un bossage complémentaire, non visible sur les figures, prévu en correspondance en saillie sur le brin inférieur 18B.

Ainsi qu'on le notera, lorsque les boucles 18 sont fermées, c'est-à-dire lorsque le retour 57 de leur brin supérieur 18A est à l'aplomb de leur brin inférieur 18B, les deux brins 18A, 18B s'étendent sensiblement suivant un même plan, comme les brins 18A, 18B des boucles précédentes.

Ainsi qu'on le notera, également, l'axe de rotation de la bague 56, qui s'étend suivant l'axe du puits 16, est contenu dans le plan que forment ainsi les brins 18A, 18B des boucles 18 en position de fermeture.

En variante, figure 12, l'un des brins 18A, 18B des boucles 18, et, par exemple, leur brin inférieur, ou intérieur, 18B, est fixe, et l'autre, et, donc, leur brin supérieur, ou extérieur, 18A, est monté pivotant, en sorte que chacune de ces boucles 18 s'apparente à un mousqueton.

Dans la forme de réalisation représentée, le brin supérieur, ou extérieur, 18A vient d'un seul tenant du corps 13 du socle de prise de courant 12, et, pour son montage pivotant, il est simplement élastiquement déformable.

De même, dans la forme de réalisation représentée, le brin inférieur, ou intérieur, 18B vient d'un seul tenant du corps 13.

En outre, pour coopérer, en fermeture, avec le brin supérieur, ou extérieur, 18A, il comporte un retour en U 61.

Bien entendu, la présente invention ne se limite pas aux formes de réalisation décrites et représentées, mais englobe toute variante d'exécution et/ou de combinaison de leurs divers éléments.

En particulier, l'une et/ou l'autre des boucles conformes aux formes de réalisation des figures 11 et 12 peuvent, si désiré, être rapportées de manière amovible, et rotative, sur le corps du socle de prise de courant concerné, à la manière de ce qui a été décrit pour les formes de réalisation des figures 1 à 10 et 10bis.

Par ailleurs, le domaine d'application de l'invention ne se limite pas aux seuls cordons prolongateurs, mais s'étend au contraire à n'importe quelle autre prise mobile.

## Revendications

1. Socle de prise de courant pour prise mobile, notamment pour cordon prolongateur, lequel socle comporte un puits (16) pour recevoir à embrochement une fiche de prise de courant (48), **caractérisé en ce qu'**il est équipé par lui-même, latéralement, d'au moins une boucle (18) présentant, à distance l'une de l'autre, une extrémité fermée (19) et une extrémité ouverte (20), cette boucle (18) étant formée de deux brins (18A, 18B), l'un supérieur, l'autre inférieur, montés mobiles l'un par rapport à l'autre entre une position de fermeture, pour laquelle, à l'extrémité ouverte (20) de la boucle (18), ils sont relativement rapprochés l'un de l'autre, et une position d'ouverture, pour laquelle ils sont au contraire relativement écartés l'un de l'autre, ladite boucle (18) étant adaptée à s'opposer à une déconnexion de ladite fiche (48) embrochée sur ledit socle et dont le câble électrique (11) y est reçu à crochetage.

2. Socle de prise de courant suivant la revendication 1, **caractérisé en ce que** les deux brins (18A, 18B) de la boucle (18) sont d'un seul tenant l'un avec l'autre à l'extrémité fermée (19) de cette boucle (18), en appartenant conjointement l'un et l'autre à une seule et même pièce, et, pour leur mobilité relative l'un par rapport à l'autre, l'un au moins d'entre eux est élastiquement déformable, en sorte que la boucle (18) s'apparente à une agrafe.

3. Socle de prise de courant suivant la revendication 2, **caractérisé en ce que** seul le brin supérieur (18A) de la boucle (18) est élastiquement déformable.

4. Socle de prise de courant suivant la revendication 3, **caractérisé en ce que** le brin inférieur (18B) de la boucle (18) présente, en saillie sur sa surface externe, au moins une nervure de rigidification (36).

5. Socle de prise de courant suivant l'une quelconque des revendications 2 à 4, **caractérisé en ce que,** à son extrémité fermée (19), la boucle (18) comporte un perçage (38) qui la traverse de part en part.

6. Socle de prise de courant suivant l'une quelconque des revendications 2 à 5, **caractérisé en ce que** les deux brins (18A, 18B) de la boucle (18) comportent chacun un prolongement (39A, 39B) au-delà de l'extrémité ouverte (20) de celle-ci, et les prolongements (39A, 39B) ainsi présents à cette extrémité ouverte (20) de la boucle (18) vont en divergeant l'un par rapport à l'autre, en formant ainsi entre eux un convergent d'engagement (40).

7. Socle de prise de courant suivant l'une quelconque des revendications 2 à 6, **caractérisé en ce que** l'un au moins des brins (18A, 18B) de la boucle (18), et, préférentiellement, chacun de ceux-ci, présente, en saillie sur sa surface interne, à proximité de l'extrémité fermée (19) de la boucle (18), une nervure (41A, 41B), qui s'étend transversalement sur une partie au moins de sa largeur.

8. Socle de prise de courant suivant l'une quelconque des revendications 2 à 7, **caractérisé en ce que** l'un au moins des brins (18A, 18B) de la boucle (18) présente, en saillie sur sa surface interne, à proximité de l'extrémité ouverte (20) de cette boucle (18), un ergot (42A, 42B).

9. Socle de prise de courant suivant la revendication 8, **caractérisé en ce que** l'un et l'autre des brins (18A, 18B) de la boucle (18) présentent un ergot (42A, 42B) en saillie sur leur surface interne, et, d'un brin (18A, 18B) à l'autre, les ergots (42A, 42B) sont décalés longitudinalement l'un par rapport à l'autre d'une longueur suffisante pour que le front arrière (43) de l'un se situe à une distance (D), éventuellement nulle, du front avant (44) de l'autre.

10. Socle de prise de courant suivant la revendication 9, **caractérisé en ce que** les ergots (42A, 42B) que les brins (18A, 18B) de la boucle (18) présentent en saillie sur leur surface interne ont des hauteurs suffisantes pour que, au repos, leurs extrémités libres (45A, 45B) soient imbriquées.

11. Socle de prise de courant suivant l'une quelconque des revendications 2 à 10, **caractérisé en ce que** le brin inférieur (18B) de la boucle (18) a une largeur supérieure à celle de son brin supérieur (18A).

12. Socle de prise de courant suivant l'une quelconque des revendications 2 à 11, **caractérisé en ce que** l'un et l'autre des brins (18A, 18B) de la boucle (18) sont cintrés, avec leur concavité tournée vers l'intérieur.

13. Socle de prise de courant suivant la revendication 12, **caractérisé en ce que** la boucle (18) est globalement aplatie.

14. Socle de prise de courant suivant la revendication 1, **caractérisé en ce que** les deux brins (18A, 18B) de la boucle (18) appartiennent, chacun respectivement, à des pièces distinctes, et, pour leur mobilité relative l'un par rapport à l'autre, ils sont montés pivotants l'un sur l'autre autour d'un axe d'articulation (A), en sorte que la boucle (18) s'apparente à une pince.

15. Socle de prise de courant suivant la revendication 14, **caractérisé en ce que** les deux brins (18A, 18B) de la boucle (18) se prolongent l'un et l'autre par un levier de préhension (51A, 51B) au-delà de leur axe d'articulation (A).

16. Socle de prise de courant suivant l'une quelconque des revendications 13, 14, **caractérisé en ce que** les deux brins (18A, 18B) de la boucle (18) sont sollicités en permanence en direction de leur position de fermeture par des moyens élastiques (52).

17. Socle de prise de courant suivant la revendication 1, **caractérisé en ce que** l'un des brins (18A, 18B) de la boucle (18) est fixe, et l'autre appartient à une bague (56) montée rotative.

18. Socle de prise de courant suivant la revendication 17, **caractérisé en ce que** l'un des brins (18A, 18B) de la boucle (18) s'étend de manière sensiblement rectiligne, et l'autre présente un retour (57) dans sa direction.

19. Socle de prise de courant suivant la revendication 1, **caractérisé en ce que** l'un des brins (18A, 18B) de la boucle (18) est fixe, et l'autre est monté pivotant, en sorte que la boucle (18) s'apparente à un mousqueton.

20. Socle de prise de courant suivant l'une quelconque des revendications 1 à 19, **caractérisé en ce que** la boucle (18) est amovible.

21. Socle de prise de courant suivant la revendication 20, **caractérisé en ce qu'**il comporte, en surface, une poche (22), dont la paroi de façade (23) est ajourée par une fente (24) à compter de son bord libre (25), et la boucle (18) comporte, au bout d'un fût (26) dont la largeur est inférieure à celle de cette fente (24), une embase (27) par laquelle elle est apte à être engagée dans la poche (22).

22. Socle de prise de courant suivant la revendication 21, **caractérisé en ce que** la fente (24) forme un col de retenue (30) à proximité de son débouché.

23. Socle de prise de courant suivant l'une quelconque des revendications 21, 22, **caractérisé en ce que** la boucle (18) est rotative et son embase (27) a un contour circulaire.

24. Socle de prise de courant suivant la revendication 23, **caractérisé en ce que** le fond (29) de la poche (22) a lui-même un contour hémi-circulaire, au rayon de celui de l'embase (27) de la boucle (18).

25. Socle de prise de courant suivant l'une quelconque des revendications 23, 24, **caractérisé en ce que** des moyens d'indexation sont prévus entre la boucle (18) et lui.

26. Socle de prise de courant suivant l'une quelconque des revendications 17 à 19, **caractérisé en ce qu'**il comporte dos à dos deux boucles (18).

## Claims

1. A connection socket for a mobile connection, in particular for an extension lead, which socket comprises a recess (16) for receiving in engaging relationship therein a connection plug (48), **characterised in that** it is equipped in itself laterally with at least one loop (18) having at a spacing from each other a closed end (19) and an open end (20), said loop (18) being formed by two limbs (18A, 18B), one being an upper limb and the other being a lower limb, which are mounted movably relative to each other between a closure position for which at the open end (20) of the loop (18) they are relatively moved towards each other and an open position for which they are in contrast relatively moved away from each other, said loop (18) being adapted to oppose disconnection of said plug (48) which is engaged on to said socket and of which the electric cable (11) is received therein in latching engagement.

2. A connection socket according to claim 1 **characterised in that** the two limbs (18A, 18B) of the loop (18) are in one piece with each other at the closed end (19) of said loop (18), both jointly belonging to one and the same portion, and for their relative mobility with respect to each other one at least thereof is elastically deformable in such a way that the loop (18) resembles a clip.

3. A connection socket according to claim 2 **characterised in that** only the upper limb (18A) of the loop (18) is elastically deformable.

4. A connection socket according to claim 3 **characterised in that** the lower limb (18B) of the loop has at least one stiffening rib (36) in projecting relationship on its outside surface.

5. A connection socket according to any one of claims 2 to 4 **characterised in that** at its closed end (19) the loop (18) comprises an opening (38) which passes therethrough.

6. A connection socket according to any one of claims 2 to 5 **characterised in that** the two limbs (18A, 18B) of the loop (18) each comprise a prolongation (39A, 39B) beyond the open end (20) thereof and the prolongations (39A, 39B) which are thus present at said open end (20) of the loop (18) diverge relative to each other, thus forming an engagement convergent configuration (40) between them.

7. A connection socket according to any one of claims 2 to 6 **characterised in that** one at least of the limbs (18A, 18B) of the loop (18) and preferably each thereof has in projecting relationship on its inside surface and in the proximity of the closed end (19) of the loop (18) a rib (41A, 41B) which extends transversely over a part at least of its length.

8. A connection socket according to any one of claims 2 to 7 **characterised in that** one at least of the limbs (18A, 18B) of the loop (18) has in projecting relationship on its inside surface and in the proximity of the open end (20) of said loop (18) a lug (42A, 42B).

9. A connection socket according to claim 8 **characterised in that** both of the limbs (18A, 18B) of the loop (18) have a lug (42A, 42B) in projecting relationship on their inside surface and from one limb (18A, 18B) to the other the lugs (42A, 42B) are displaced longitudinally relative to each other by a sufficient length for the rear face (43) of one to be disposed at a spacing (D) which is possibly zero from the front face (44) of the other.

10. A connection socket according to claim 9 **characterised in that** the lugs (42A, 42B) that the limbs (18A, 18B) of the loop (18) have in projecting relationship on their inside surface are of sufficient heights for the free ends (45A, 45B) thereof to overlap in the rest condition.

11. A connection socket according to any one of claims 2 to 10 **characterised in that** the lower limb (18B) of the loop (18) is of a width that is greater than that of its upper limb (18A).

12. A connection socket according to any one of claims 2 to 11 **characterised in that** both of the limbs (18A, 18B) of the loop (18) are curved, with their concavity directed inwardly.

13. A connection socket according to claim 12 **characterised in that** the loop (18) is overall flattened.

14. A connection socket according to claim 1 **characterised in that** the two limbs (18A, 18B) of the loop (18) each respectively belong to different portions and for their relative mobility with respect to each other they are mounted pivotably one upon the other about a pivot axis (A) so that the loop (18) resembles a clamp.

15. A connection socket according to claim 14 **characterised in that** the two limbs (18A, 18B) of the loop (18) are both prolonged by a gripping lever (51A, 51B) beyond their pivot axis (A).

16. A connection socket according to either one of claims 13 and 14 **characterised in that** the two limbs (18A, 18B) of the loop (18) are permanently urged in the direction of their closure position by elastic means (52).

17. A connection socket according to claim 1 **characterised in that** one of the limbs (18A, 18B) of the loop (18) is fixed and the other belongs to a rotatably mounted ring (56).

18. A connection socket according to claim 17 **characterised in that** one of the limbs (18A, 18B) of the loop (18) extends substantially rectilinearly and the other has a return (57) in its direction.

19. A connection socket according to claim 1 **characterised in that** one of the limbs (18A, 18B) of the loop (18) is fixed and the other is mounted pivotably so that the loop (18) resembles a snap hook.

20. A connection socket according to any one of claims 1 to 19 **characterised in that** the loop (18) is removable.

21. A connection socket according to claim 20 **characterised in that** at its surface it comprises a pocket (22), the front wall (23) of which is apertured by a slot (24) from its free edge (25) and the loop (18), at the end of a stem (26), the width of which is less than that of said slot (24), comprises a base (27) by way of which it is capable of being engaged in the pocket (22).

22. A connection socket according to claim 21 **characterised in that** the slot (24) forms a retaining neck (30) in the proximity of its mouth opening.

23. A connection socket according to either one of claims 21 and 22 **characterised in that** the loop (18) is rotatable and its base (27) is of a circular contour.

24. A connection socket according to claim 23 **characterised in that** the bottom (29) of the pocket (22) is itself semicircular in contour, with the radius being that of the base (27) of the loop (18).

25. A connection socket according to either one of claims 23 and 24 **characterised in that** indexing means are provided between the loop (18) and same.

26. A connection socket according to any one of claims 17 to 19 **characterised in that** it comprises two loops (18) in back-to-back relationship.

## Patentansprüche

1. Kupplungssteckdose, insbesondere für Verlängerungskabel, die eine Buchse (16) zum Einstecken eines Steckers (48) umfasst,
**dadurch gekennzeichnet, dass** sie selbst seitlich mit wenigstens einer Spange (18) ausgestattet ist, die voneinander beabstandet ein geschlossenes Ende (19) und ein offenes Ende (20) aufweist, wobei die Spange (18) von zwei Schenkeln (18A, 18B), einem oberen und einem unteren, gebildet ist, die bezüglich einander zwischen einer geschlossenen Stellung, in der sie am offenen Ende (20) der Spange (18) einander ziemlich angenähert sind, und einer geöffneten Stellung, in der sie hingegen voneinander ziemlich entfernt sind, beweglich gelagert sind, wobei die Spange (18) eine Verbindungstrennung des in die Steckdose eingesteckten Steckers (48), dessen Stromkabel (11) in ihr eingehängt aufgenommen ist, zu unterbinden vermag.

2. Steckdose nach Anspruch 1,
**dadurch gekennzeichnet, dass** die zwei Schenkel (18A, 18B) der Spange (18) an dem geschlossenen Ende (19) der Spange (18) einstückig miteinander ausgebildet sind, wobei sie gemeinsam beide nur einem einzigen Teil zugehörig sind, und für ihre relative Beweglichkeit bezüglich einander wenigstens einer von ihnen solchermaßen elastisch verformbar ist, dass die Spange (18) einer Klammer gleicht.

3. Steckdose nach Anspruch 2,
**dadurch gekennzeichnet, dass** nur der obere Schenkel (18A) der Spange (18) elastisch verformbar ist.

4. Steckdose nach Anspruch 3,
**dadurch gekennzeichnet, dass** der untere Schenkel (18B) der Spange (18) an seiner Außenseite vorstehend wenigstens eine Versteifungsrippe (36) aufweist.

5. Steckdose nach einem der Ansprüche 2 bis 4,
**dadurch gekennzeichnet, dass** die Spange (18) an ihrem geschlossenen Ende (19) eine Bohrung (38) aufweist, die diese vollständig durchquert.

6. Steckdose nach einem der Ansprüche 2 bis 5,
**dadurch gekennzeichnet, dass** die beiden Schenkel (18A, 18B) der Spange (18) jeweils jeder eine Verlängerung (39A, 39B) über deren offenes Ende (20) hinaus aufweisen, und die folglich an dem offenen Ende (20) der Spange (18) vorhandenen Verlängerungen (39A, 39B) bezüglich einander auseinanderstreben und dabei zwischen sich eine Einsteckzuführung bilden.

7. Steckdose nach einem der Ansprüche 2 bis 6,
**dadurch gekennzeichnet, dass** wenigstens einer der Schenkel (18A, 18B) der Spange (18), und vorzugsweise jeder von ihnen, an seiner Innenseite vorstehend in der Nähe des geschlossenen Endes (19) der Spange (18) eine Rippe (41A, 41B) aufweist, die sich über wenigstens einen Teil von deren Breite quer erstreckt.

8. Steckdose nach einem der Ansprüche 2 bis 7,
**dadurch gekennzeichnet, dass** der wenigstens eine Schenkel (18A, 18B) der Spange (18) an seiner Innenseite vorstehend in der Nähe des offenen Endes (20) der Spange (18) eine Nase (42A, 42B) aufweist.

9. Steckdose nach Anspruch 8,
**dadurch gekennzeichnet, dass** die Schenkel (18A, 18B) der Spange (18) beide an ihrer Innenseite vorstehend eine Nase (42A, 42B) aufweisen und die Nasen (42A, 42B) von einem Schenkel (18A, 18B) zum anderen in Längsrichtung bezüglich einander mit einer Länge versetzt sind, die ausreicht, um die Rückseite (43) der einen mit einem Abstand (D), der gegebenenfalls gleich null ist, zur Vorderseite (44) der anderen anzuordnen.

10. Steckdose nach Anspruch 9,
**dadurch gekennzeichnet, dass** sowohl die Nasen (42A, 42B) als auch die Schenkel (18A, 18B) der Spange (18) an ihrer Innenseite vorstehend eine Höhe haben, die ausreicht, um ihre freien Enden (45A, 45B) im Ruhezustand übereinanderliegend anzuordnen.

11. Steckdose nach einem der Ansprüche 2 bis 10,
**dadurch gekennzeichnet, dass** der untere Schenkel (18B) der Spange (18) eine größere Breite hat als der obere Schenkel (18A).

12. Steckdose nach einem der Ansprüche 2 bis 11,
**dadurch gekennzeichnet, dass** die Schenkel (18A, 18B) der Spange (18) beide gebogen sind, wobei ihre Konkavität nach innen weist.

13. Steckdose nach Anspruch 12,
**dadurch gekennzeichnet, dass** die Spange (18) allgemein flach liegend ist.

14. Steckdose nach Anspruch 1,
**dadurch gekennzeichnet, dass** die beiden Schenkel (18A, 18B) der Spange (18) jeweils zu getrennten Teilen gehören und sie für ihre relative Beweglichkeit zueinander um eine Drehachse (A) herum schwenkend aufeinander solchermaßen gelagert sind, dass die Spange (18) einer Zange gleicht.

15. Steckdose nach Anspruch 14,
**dadurch gekennzeichnet, dass** sich die zwei Schenkel (18A, 18B) der Spange (18) beide durch einen Greifhebel (51A, 51B) über ihre Drehachse (A) hinaus fortsetzen.

16. Steckdose nach einem der Ansprüche 13, 14,
**dadurch gekennzeichnet, dass** die zwei Schenkel (18A, 18B) der Spange (18) durch elastische Mittel (52) ständig in Richtung ihrer geschlossenen Stellung gedrängt werden.

17. Steckdose nach Anspruch 1,
**dadurch gekennzeichnet, dass** einer der Schenkel (18A, 18B) der Spange (18) feststehend ist und der andere einem drehbar gelagerten Ring (56) zugehörig ist.

18. Steckdose nach Anspruch 17,
**dadurch gekennzeichnet, dass** sich einer der Schenkel (18A, 18B) der Spange (18) im Wesentlichen gerade erstreckt und der andere in dessen Richtung einen Rücksprung (57) aufweist.

19. Steckdose nach Anspruch 1,
**dadurch gekennzeichnet, dass** einer der Schenkel (18A, 18B) der Spange (18) feststehend ist und der andere solchermaßen schwenkbar gelagert ist, dass die Spange (18) einem Karabinerhaken gleicht.

20. Steckdose nach einem der Ansprüche 1 bis 19,
**dadurch gekennzeichnet, dass** die Spange (18) abnehmbar ist.

21. Steckdose nach Anspruch 20,
**dadurch gekennzeichnet, dass** sie auf der Oberseite eine Tasche (22) aufweist, deren Stirnwand (23) von ihrem freien Rand (25) ausgehend mit einem Schlitz (24) durchbrochen ist, und die Spange (18) am Ende eines Schafts (26), dessen Breite geringer ist als der Schlitz (24), einen Sockel (27) aufweist, durch den sie in die Tasche (22) eingeführt zu werden vermag.

22. Steckdose nach Anspruch 21,
**dadurch gekennzeichnet, dass** der Schlitz (24) in der Nähe seiner Öffnung einen Haltekragen (30) bildet.

23. Steckdose nach einem der Ansprüche 21, 22,
**dadurch gekennzeichnet, dass** die Spange (18) drehbar ist und ihr Sockel (27) einen kreisförmigen Umfang hat.

24. Steckdose nach Anspruch 23,
**dadurch gekennzeichnet, dass** der Boden (29) der Tasche (22) selbst einen halbkreisförmigen Umfang mit dem Radius des Sockels (27) der Spange (18) hat.

25. Steckdose nach einem der Ansprüche 23, 24,
**dadurch gekennzeichnet, dass** Positionierungsmittel zwischen ihr und der Spange (18) vorgesehen sind.

26. Steckdose nach einem der Ansprüche 17 bis 19,
**dadurch gekennzeichnet, dass** sie mit dem Rücken aneinanderliegend zwei Spangen (18) umfasst.
